# EUROPEAN PATENT APPLICATION

(11) **EP 4 534 919 A1**
(43) Date of publication of application: **09.04.2025**
(21) Application number: 23838561.1
(22) Date of filing: 17.08.2023
(51) Int. Cl.: F24F 11/89, F16K 31/22, F24F 6/12

(54) **HUMIDIFYING DEVICE AND VALVE BODY ASSEMBLY**

(30) Priority: 15.07.2022 CN 202221834291 U; 03.08.2022 CN 202222047300 U
(71) Applicant: GD Midea Environment Appliances MFG Co., Ltd., Zhongshan, Guangdong 528425 (CN)
(72) Inventor: HU, Huacheng, Zhongshan, Guangdong 528425 (CN); CUI, Shiqiang, Zhongshan, Guangdong 528425 (CN); YANG, Tao, Zhongshan, Guangdong 528425 (CN)
(74) Representative: RGTH
(86) International application number: PCT/CN2023/096417
(87) International publication number: WO 2024/012067

(57) **Abstract**

A humidification device (100) and a valve body assembly (60) including the same. The humidification device (100) includes a box assembly (10) and a humidification assembly (30). The box assembly (10) is provided with a cavity for storing water. The humidification assembly (30) is detachably installed on the box assembly (10) as a whole. The humidification assembly (30) includes a fan component (31) and an atomization component (32). The atomization component (32) is used to atomize water in the cavity (20) to form water mist, and the fan component (31) is used to drive the water mist to flow into a room. The valve body assembly (60) is provided between the first accommodating cavity (21) and the second accommodating cavity (22) of the humidification device (100). The valve body assembly (60) includes a first valve body component (61) and a second valve body component (62), the first valve body component (61) is formed to communicate the first accommodating cavity (21) with the second accommodating cavity (22), and the second valve body component (62) is rotatable relative to the first valve body component (61). The second valve body component (62) includes a float (80) and a seal (81). The float (80) is configured to rise and fall with the change of the water level in the second chamber (22). The seal (81) rotates between the first working position and the second working position as the float (80) rises and falls. The seal (81) blocks the passage in the first working position and open the passage in the second working position. The humidification assembly can be completely separated from the box assembly for storing water, allowing users to easily clean the water tank without avoiding electrical components, making water level control more accurate, and the structure is simple and reliable.

## Description

### CROSS-REFERENCE TO RELATED APPLICATIONS

This application claims priority to Chinese Patent Application No. 202221834291.0, filed on July 15, 2022 and Chinese Patent Application No. 202222047300.8, filed on August 3, 2022, the entire contents of which are incorporated herein by reference.

### FIELD

The present application relates to the technical field of humidification devices, and in particular to a humidification device and a valve body assembly.

### BACKGROUND

In the related art, a humidification apparatus usually comprises a water tank and a humidification device. The water tank is used to supply water to the humidification device. The humidification device is used to convert the water in the water tank into water mist and spray it out to improve the air humidity in the target environment. It is necessary for the water tank to provide with a water level control system, and it is usually necessary for the humidification device to provide with a fan, an oscillating plate and other electrically charged functional components. However, in order to ensure that the water mist of the humidification device is clean enough, users need to clean the water tank frequently. Many of these electrically charged functional components are installed in the water tank, and the traditional water level control system has a complex structure, which causes users to avoid these electrically charged functional components when cleaning the water tank. As a result, cleaning is troublesome and incomplete. Moreover, water is also prone to enter these electrically charged functional components when users clean the water tank, causing damage and reducing the service life of the humidification device.

### SUMMARY

The main purpose of the present application is to provide a humidification device with a simple structure, easy disassembly and cleaning and long service life.

In order to achieve the above purpose, the present application provides a humidification device, comprising:
a box assembly provided with a cavity for storing water; and
a humidification assembly comprising a fan component and an atomization component, where the humidification assembly is detachably installed on the box assembly as a whole, and the atomization component is configured to atomize water in the cavity to form water mist.

In an embodiment, the fan component is configured to deliver airflow toward the atomization component in a first direction, and drive the water mist to flow toward a room in a second direction after the airflow reaches the atomization component; and the first direction is a radial direction of the fan component.

In an embodiment, the humidification component further comprises an air duct wall connecting the fan component and the atomization component, and the air duct wall forms an air duct for communicating with the room to allow the water mist to flow toward the room along the air duct.

In an embodiment, the air duct wall is configured to extend in an up-down direction, the fan component is located at an upper end of the air duct wall, and the atomization component is located at a lower end of the air duct wall.

In an embodiment, the air duct comprises a first air supply section and a second air supply section provided sequentially in an air supply direction, and an air inlet of the first air supply section and an air outlet of the second air supply section are both located at the upper end of the air duct wall; the fan component is located at the air inlet of the first air supply section; and an adjoiner between the first air supply section and the second air supply section is located at a lower end of the air duct wall and is provided with the atomization component.

In an embodiment, the humidification device further comprises a flow guiding ring, the flow guiding ring is provided in the second air supply section and is located above the atomization component, and the flow guiding ring has a through hole extending in the up-down direction.

In an embodiment, the atomization component comprises an oscillating plate, an inner diameter of the oscillating plate is R, and an inner diameter of the through hole is greater than or equal to 1.1R and less than or equal to 1.5R; and/or
a distance between a bottom of the flow guiding ring and an upper side of the oscillating plate is greater than or equal to 20mm and less than or equal to 40mm; and/or
a size of the through hole in the up-down direction is greater than or equal to 10mm and less than or equal to 20mm.

In an embodiment, a plurality of drainage ribs are provided to protrude from an upper side of the flow guiding ring, wherein the plurality of drainage ribs are distributed at intervals in a circumferential direction of the through hole.

In an embodiment, a number of the drainage ribs is greater than or equal to 4 and less than or equal to 9.

In an embodiment, the box assembly comprises a water tank and a cover, the water tank is configured to form the cavity with an opening at an upper side, and the cover is configured to cover the upper side of the water tank; and a mist outlet is formed on the cover and is communicated with the air duct, so that the water mist flows to the room through the mist outlet.

In an embodiment, the mist outlet is elongated, and a width of the mist outlet is greater than or equal to 4mm and less than or equal to 7mm.

In an embodiment, a mist isolation component is provided between the atomization component and the mist outlet, a projected area of a mist channel at the mist isolation component in the up-down direction is S, and a projected area of the mist isolation component in the up-down direction is greater than or equal to 0.5S.

In an embodiment, the humidification assembly is sandwiched between the cover and the water tank and is at least partially accommodated in the cavity.

In an embodiment, the cavity comprises a first accommodating cavity and a second accommodating cavity spaced apart in a transverse direction, and a valve body assembly is provided between the first accommodating cavity and the second accommodating cavity; a water inlet is provided on the cover and is located above the first accommodating cavity, the humidification assembly is at least partially accommodated in the second accommodating cavity, and the mist outlet is located above the second accommodating cavity.

In order to achieve the above purpose, the present application further provides a valve body assembly, applied to the humidification device as described above, the valve body assembly is provided between a first accommodating cavity and a second accommodating cavity of the humidification device, the valve body assembly comprises:
a first valve body component, where the first valve body component forms a passage for communicating the first accommodating cavity with the second accommodating cavity; and
a second valve body component comprising a float and a seal, where the second valve body component is rotatably arranged relative to the first valve body component, the float is configured to rise and fall with a change in a water level of the second accommodating cavity, the seal is configured to rotate between a first working position and a second working position as the float rises and falls; and the seal is configured to block the passage in the first working position and open the passage in the second working position.

In an embodiment, the second valve body component has a rotating end and a free end that rotates up and down around the rotating end, the float is provided on the free end, and the seal is located between the rotating end and the free end.

In an embodiment, the first valve body component comprises an elastic water-sealing component, the passage is formed in the elastic water-sealing component, and the seal is configured to press against a water outlet end of the passage in the first working position to enable the elastic water-sealing component to deform under pressure.

In an embodiment, the passage has a water outlet section adjacent to the water outlet end and extending in an up-down direction; the seal is located below the water outlet section and is configured to press against the water outlet section upward in the first working position; and an inner diameter of the water outlet section is configured to at least partially gradually expand and then contract from top to bottom.

In an embodiment, the first valve body component is detachably mounted on a partition between the first accommodating cavity and the second accommodating cavity.

In an embodiment, the first valve body component has a mounting portion, the second valve body component has a mounting fitting portion, and the second valve body component is rotatably mounted on the first valve body component through cooperation between the mounting portion and the mounting fitting portion.

In an embodiment, one of the mounting portion and the mounting fitting portion is a rotating shaft, and the other is an open slot for the rotating shaft to engage.

In an embodiment, the first valve body component comprises a tubular portion, and the tubular portion is inserted into a through hole of the partition to have a first end located in the first accommodating cavity and a second end located in the second accommodating cavity; the elastic water-sealing component is provided at the second end and is detachably inserted into the tubular portion.

In an embodiment, a baffle is provided to protrude from a periphery of the tubular portion; the first valve body component further comprises a fixing portion, the fixing portion is detachably connected to the first end, so that the partition is clamped between the fixing portion and the baffle.

In an embodiment, the fixing portion is a knob, and the knob is screwed to the first end.

In an embodiment, a sealing ring is provided around an outside of the tubular portion, and the sealing ring is provided between the tubular portion and the partition.

The humidification device provided by the present application comprises a box assembly and a humidification assembly. The box assembly is provided with a cavity for storing water. The humidification assembly is detachably installed on the box assembly as a whole. The humidification assembly comprises a fan component and an atomization component. The atomization component is configured to atomize water in the cavity to form water mist, and the fan component is configured to drive the water mist to flow to a room. The valve body assembly comprises a first valve body component and a second valve body component. The first valve body component forms a passage, and the passage is configured to communicate the first accommodating cavity and the second accommodating cavity. The second valve body component is rotatable relative to the first valve body component. The second valve body component comprises a float and a seal, the float is configured to rise and fall with the change in the water level of the second accommodating cavity, and the seal rotates between the first working position and the second working position as the float rises and falls. The seal blocks the passage in the first working position and opens the passage in the second working position. In the embodiments provided by the present application, the electrically charged functional components of the humidification device, such as the fan component and the atomization component, are integrated into one as the humidification assembly. The humidification assembly can be completely separated from the box assembly for storing water as a whole, which allows users to easily disassemble and separate components in the humidification device to clean the water tank without avoiding live parts. The first valve body component is detachably mounted on the partition, and the second valve body component is rotatably mounted on the first valve body component, so that the valve body assembly can be completely removed from the water tank for maintenance to prevent water from entering the live parts in the humidification device during cleaning by the user, thereby extending the service life of the humidification device.

### BRIEF DESCRIPTION OF THE DRAWINGS

In order to more clearly describe technical solutions in the embodiments of the present application or in the related art, accompanying drawings needed to be used in the description of the embodiments or the related art will be briefly introduced below. Obviously, the accompanying drawings in the following description are only some embodiments of the present application. For those skilled in the art, other drawings can be obtained based on the structures shown in these drawings without creative efforts.
FIG. 1 is a schematic three-dimensional structural view of a humidification device according to an embodiment of the present application.
FIG. 2 is an exploded schematic three-dimensional structural view of the humidification device in FIG. 1.
FIG. 3 is a cross-sectional view of the humidification device in an up-down direction in FIG. 1.
FIG. 4 is a schematic three-dimensional structural view of a cover in FIG. 2.
FIG. 5 is a front view of a lower side of the cover in FIG. 4.
FIG. 6 is a front view of an upper side of the cover in FIG. 4.
FIG. 7 is a schematic three-dimensional structural view of a flow guiding ring in FIG. 3.
FIG. 8 is a front view of the upper side of the flow guiding ring in FIG. 7.
FIG. 9 is a cross-sectional view of the humidification device in a horizontal direction in FIG. 1.
FIG. 10 is a partial cross-sectional view showing only a valve assembly of the humidification device according to an embodiment of the present application.
FIG. 11 is an enlarged schematic view at position A in FIG. 10.
FIG. 12 is an exploded schematic view of a partial three-dimensional structure of the humidification device in FIG. 10.

### Description of reference signs:

| reference sign | name | reference sign | name |
|---|---|---|---|
| 100 | humidification device | 40 | flow guiding ring |
| 10 | box assembly | 41 | through hole |
| 11 | water tank | 42 | drainage rib |
| 12 | cover | 50 | mist isolation component |
| 20 | cavity | 60 | valve body assembly |
| 21 | first accommodating cavity | 61 | first valve body component |
| 22 | second accommodating cavity | 62 | second valve body component |
| 23 | partition | 63 | passage |
| 101 | mist outlet | 70 | elastic water-sealing component |
| 102 | water inlet | 71 | tubular portion |
| 30 | humidification assembly | 72 | baffle |
| 31 | fan component | 73 | knob |
| 32 | atomization component | 74 | sealing ring |
| 33 | air duct wall | 80 | float |
| 330 | air duct | 81 | seal |
| 331 | first air supply section | 90 | water outlet end |
| 332 | second air supply section | 91 | water outlet section |
| 103 | rotating shaft | 104 | open slot |

The realization of the purpose, functional features and advantages of the present application will be further described in conjunction with the embodiments, with reference to the accompanying drawings.

### DETAILED DESCRIPTION OF EMBODIMENTS

It should be noted that if there are directional indications in the embodiments of the present application, the directional indications are only used to explain the relative positional relationship, movement, etc. between the components in a specific posture. If the specific posture changes, the directional indication will also change accordingly.

In addition, if there are descriptions such as "first", "second", etc. in the embodiments of the present application, the descriptions of "first", "second", etc. are only for descriptive purposes and cannot be understood as indicating or implying their relative importance or implicitly indicating the number of a technical feature indicated. Therefore, features defined as "first" and "second" can explicitly or implicitly comprise at least one of these features. In addition, the meaning of "and/or" appearing in the entire text is to comprise three parallel solutions. Taking "A and/or B" as an example, it comprises solution A, or solution B, or a solution that satisfies both A and B at the same time.

In the related art, a humidification apparatus usually comprises a water tank and a humidification device. The water tank is used to supply water to the humidification device. The humidification device is used to convert the water in the water tank into water mist and spray it out to improve the air humidity in the target environment. It is necessary for the water tank to provide with a water level control system, and it is usually necessary for the humidification device to provide with a fan, an oscillating plate and other electrically charged functional components. However, in order to ensure that the water mist of the humidification device is clean enough, users need to clean the water tank frequently. Many of these electrically charged functional components are installed in the water tank, and the traditional water level control system has a complex structure, which causes users to avoid these electrically charged functional components when cleaning the water tank. As a result, cleaning is troublesome and incomplete. Moreover, water is also prone to enter these electrically charged functional components when users clean the water tank, causing damage and reducing the service life of the humidification device.

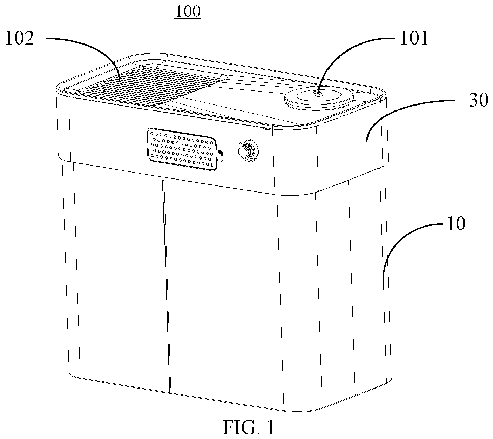

In order to solve the above technical problems, as shown in FIG. 1 to FIG. 8, the present application provides a humidification device 100. The humidification device 100 comprises a box assembly 10 and a humidification assembly 30. The box assembly 10 is provided with a cavity 20 for storing water. The humidification assembly 30 is detachably installed on the box assembly 10. In this embodiment, the specific shape and material of the box assembly 10 are not limited, as long as the cavity 20 can be formed and water can be stored in the cavity 20. The humidification assembly 30 is configured to convert the water stored in the cavity 20 into water mist, and spray the water mist indoors to improve indoor air humidity and make indoor people feel comfortable.

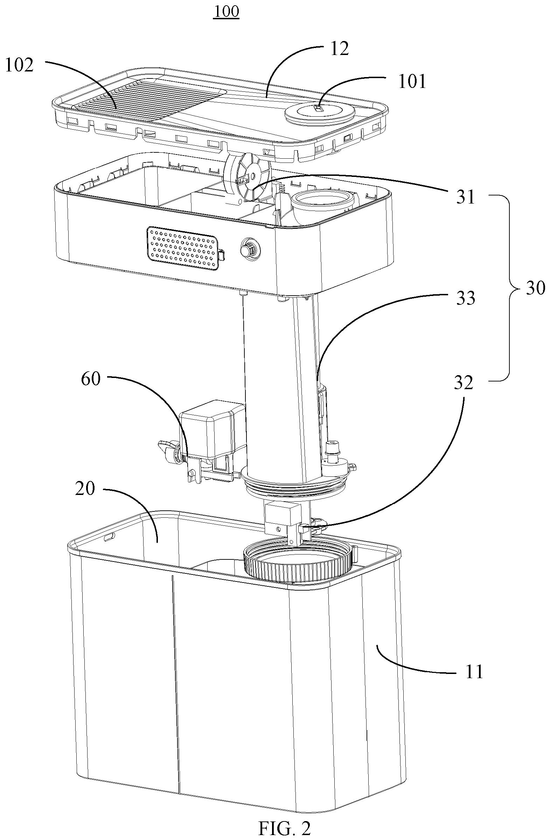

Specifically, in this embodiment, as shown in FIG. 2, the humidification assembly 30 can be detached from the box assembly 10 as a whole. Specifically, the humidification assembly 30 comprises a fan component 31 and an atomization component 32 that are integrally provided or connected to each other. The atomization component 32 is configured to atomize the water in the cavity 20 to form water mist, and the fan component 31 is configured to drive the water mist to flow indoors. The type of the atomization component 32 is not limited. In an embodiment, the atomization component 32 comprises an oscillating plate, and the oscillating plate is configured to perform ultrasonic vibration to generate water mist. In other embodiments, the atomization component 32 can also be a cold evaporation or hot evaporation atomizer. The fan component 31 mainly comprises a motor and a wind wheel. When the humidification device 100 is working, the atomization component 32 generates water mist, and the motor is configured to drive the wind wheel to rotate and generate airflow to blow the water mist in the cavity 20 out of the cavity 20 and into the room, thereby increasing the moisture content in the room and improving the indoor air humidity.

It should be noted that the description of the direction and orientation in the present application only refers to the state of the humidification device 100 during normal use after installation, and does not comprise the state of the humidification device 100 during production, transportation, installation and sales. In this embodiment, the up-down direction refers to a direction substantially parallel to gravity. A transverse direction refers to the direction substantially perpendicular to the up-down direction.

The atomization component 32 and the fan component 31 can be integrally provided in various ways. For example, they can be integrally formed, or multiple components can be bonded together to form one. As long as the humidification assembly 30 as a whole can be connected to the box assembly 10 in an easily detachable manner. For example, the humidification assembly 30 can be snapped onto the box assembly 10, so that the humidification assembly 30 can be detached from the box assembly 10 as a whole.

In the embodiment provided by the present application, the electrically charged functional components such as the fan component 31 and the atomization component 32 in the humidification device 100 are integrated into one body as the humidification assembly 30, and the humidification assembly 30 can be completely separated from the box assembly 10 for storing water as a whole. When the user needs to clean the box assembly 10, he only needs to conveniently disassemble the humidification assembly 30 as a whole from the box assembly 10, and then the water tank 11 can be easily and thoroughly cleaned without avoiding the electrically charged functional components such as the atomization component 32 or the fan component 31, which can prevent water from entering the electrically charged components in the humidification device 100 when the user cleans the water tank 11, thereby extending the service life of the humidification device 100.

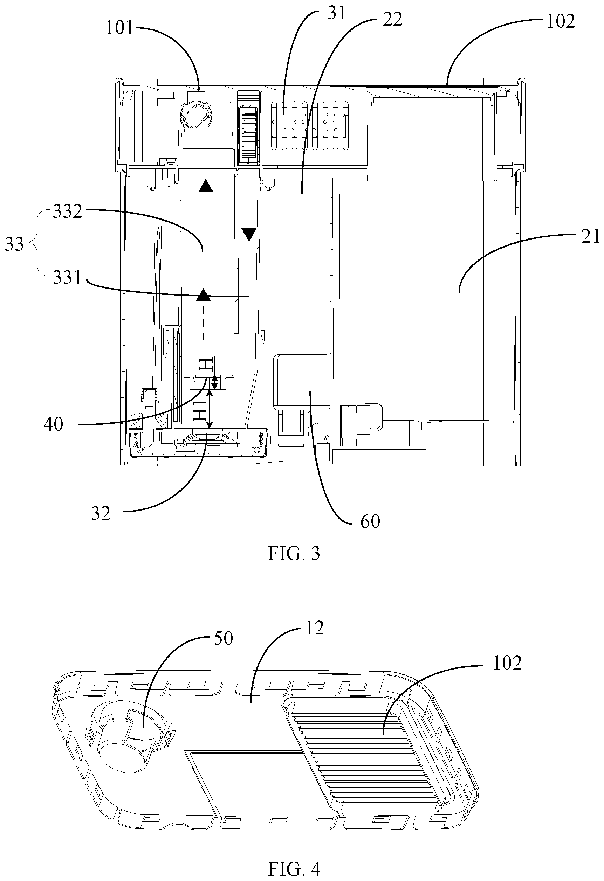

Based on the previous embodiment, as shown in FIG. 3, the fan component 31 is configured to deliver airflow toward the atomization component 32 in a first direction, and after the airflow reaches the atomization component 32, drive the water mist to flow indoors in a second direction. The first direction is a radial direction of the fan component 31. In this embodiment, the first direction is different from the second direction. In this way, the flow direction of the water mist is different from the air outlet direction of the fan component 31, and the water mist will basically not flow back to the fan component 31, thereby ensuring that the fan component 31 is dry, not easily damaged by water mist, and has better reliability. In an embodiment, the first direction is from top to bottom, and the second direction is from bottom to top. Moreover, in this embodiment, the first direction is the radial direction of the fan component 31. The specific type of the fan component 31 is not limited. In an embodiment, the fan component 31 is a centrifugal fan, which has a smaller volume and a larger air supply volume.

On the basis of the previous embodiment, as shown in FIG. 2 and FIG. 3, the humidification assembly 30 also comprises an air duct wall 33 connecting the fan component 31 and the atomization component 32. The air duct wall 33 forms an air duct 330 that connects the cavity 20 and the indoor space, so that the water mist flows toward the indoor space along the air duct 330. It can be understood that in order for the water mist generated by the atomization component 32 to atomize the water in the cavity 20 to flow smoothly into the room, the humidification device 100 is provided with the air duct 330. The air flow generated when the fan component 31 is working flows along the air duct 330, driving the water mist to flow along the air duct 330. The air duct 330 has an outlet communicated with the room, so that the water mist is blown indoors along the air duct 330. The structure and material of the air duct wall 33 are not limited, as long as it can form the air duct 330 communicated with the indoor space. The air duct 330 is communicated with the cavity 20 and/or have an inlet for the water mist to enter the air duct 330. The water mist in the air duct 330 is blown indoors by the air flow generated by the operation of the fan component 31. Due to the wind pressure generated by the fan component 31, the water mist can be sent to a place far away from the humidification device 100, so that the indoor humidity can rise rapidly and widely.

Based on the previous embodiment, as shown in FIG. 2 and FIG. 3, in this embodiment, the air duct wall 33 extends in the up-down direction, the fan component 31 is located at an upper end of the air duct wall 33, and the atomization component 32 is located at a lower end of the air duct wall 33.

It should be noted that the description of the direction and orientation in the present application only refers to the state of the humidification device 100 during normal use after installation, and does not comprise the state of the humidification device 100 during production, transportation, installation and sales. In this embodiment, the up-down direction refers to a direction substantially parallel to gravity. The transverse direction refers to a direction substantially perpendicular to the up-down direction.

In this embodiment, it can be understood that since the water in the box assembly 10 is generally located at the lower end of the box assembly 10 due to gravity, the atomization component 32 is also provided at the lower end of the box assembly 10 to facilitate contact with the water stored in the box and convert the water stored in the box into water mist. The fan assembly only needs to be positioned at a position that can deliver airflow into the air duct 330 to generate wind pressure in the air duct 330. In order to extend the service life of the fan assembly, the fan component 31 is located at the upper end of the air duct wall 33, and the atomization component 32 is located at the lower end of the air duct wall 33, so that the fan component 31 is provided far away from the area where water mist is generated, which makes it difficult for the water mist generated by the atomization component 32 to flow into the fan component 31. It can be understood that the fan component 31 is usually provided with precision charged components such as motors. If these components come into contact with water mist and get damp, they are prone to malfunction, which affects the service life of the humidification device 100 or causes the humidification device 100 to work unstable. Therefore, in this embodiment, the fan component 31 is located above the atomization component 32, which is far away from the area where the water mist is generated on the one hand, and is far away from the water stored in the box assembly 10 on the other hand, thereby reducing the probability of moisture failure of the fan component 31, extending the service life of the humidification device 100, and making the humidification device 100 work stably.

The entire air duct wall 33 extends in the up-down direction, and its shape is not limited. In an embodiment, as shown in FIG. 2 and FIG. 3, the air duct wall 33 has a hollow cylindrical structure as a whole. The air duct 330 is formed in the cylindrical air duct wall 33, and the fan component 31 is connected to the upper end of the air duct wall 33. In an embodiment, the humidification component is connected to the lower end of the air duct wall 33 and is also screwed to the air duct wall 33. The water mist generated by the atomization component 32 flows along the air duct 330 under the action of the airflow generated by the fan component 31 and flows into the room, and is sent to a place far away from the humidification device 100, so that the indoor humidity can rise rapidly and widely.

The air duct 330 can have various specific shapes, as long as it is communicated with the room, and the air flow generated by the fan component 31 and the water mist generated by the atomizer can enter the air duct 330. In an embodiment, the mist outlet 101 of the humidification device 100 is located above the humidification device 100. In order to separate the mist outlet 101 and the fan assembly, in this embodiment, as shown in FIG. 3, the air duct 330 comprises a first air supply section 331 and a second air supply section 332 provided sequentially in an air supply direction. The air inlet of the first air supply section 331 and the air outlet of the second air supply section 332 are located at the upper end of the air duct wall 33. The fan component 31 is provided at the air inlet of the first air supply section 331. The adjoining point between the first air supply section 331 and the second air supply section 332 is located at the lower end of the air duct wall 33 and is provided with the atomization component 32. In this embodiment, the first air supply section 331 and the second air supply section 332 are arranged substantially side by side. The air duct wall 33 has a partition extending in the up-down direction, and the partition is provided between the first air supply section 331 and the second air supply section 332. The fan component 31 is located at the air inlet of the first air supply section 331 and delivers airflow to the first air supply section 331 from top to bottom. The atomization component 32 is located at the lower ends of the first air supply section 331 and the second air supply section 332, and is located at the adjoining point between the first air supply section 331 and the second air supply section 332. When the airflow flows from the first air supply section 331 to the second air supply section 332, it encounters the water mist, and drives the water mist to be transported from bottom to top along the second air supply section 332, and finally blows the water mist out from the mist outlet 101 and into the room. In this embodiment, the air flow generated by the fan component 31 encounters the water mist only after passing through the first air supply section 331, and sends the water mist away along the second air supply section 332 spaced apart from the first air supply section 331. In this way, it is difficult for the water mist to enter the first air supply section 331 and contact the fan component 31. Moreover, since the first air supply section 331 extends in the up-down direction as a whole, it is difficult for both water mist and water stored in the box assembly 10 to flow along the first air supply section 331 to the fan component 31. In this way, the fan component 31 can be well separated from stored water or water mist, thereby keeping the fan component 31 dry, improving the reliability of the fan component 31 and further extending the service life of the humidifier.

Further, in an embodiment, as shown in FIGS. 3, 7 and 8, the humidification device 100 further comprises a flow guiding ring 40. The flow guiding ring 40 is provided in the second air supply section 332 and is located above the atomization component 32. The flow guiding ring 40 has a through hole 41 extending in the up-down direction. In this embodiment, the flow guiding ring 40 is provided on a path of water mist oscillation transmission, and its shape is annular. When the atomization component 32 is working, the flow guiding ring 40 gathers the water mist and reduces the internal flow loss to increase the amount of humidification. In addition, the flow guiding ring 40 can also receive the water droplets generated by the water mist gathering above to prevent the water droplets from directly dripping onto the water surface of the atomization component 32 and affecting the operation of the atomization component 32. This can also reduce the dripping sound caused by water droplets dripping onto the water surface.

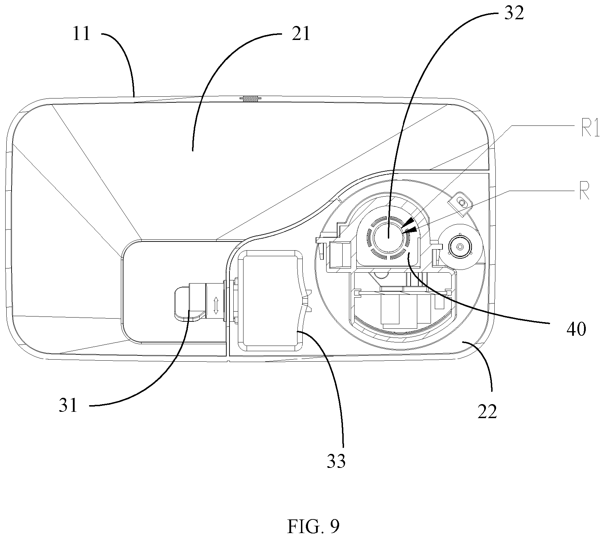

It can be understood that the size of the through hole 41 is provided in an appropriate range. If the through hole 41 is too small, it may affect the flow rate of the water mist, causing the water mist to fail to be smoothly sent to a place far away from the humidification device 100, but instead gathering at the mist outlet 101, which affects the use effect of the humidification device 100. If the through hole 41 is set too large, it will not be able to play a good gathering role, reduce the internal flow loss, and increase the humidification amount. Therefore, in an embodiment, as shown in FIG. 9, the atomization component 32 comprises an oscillating plate. The inner diameter of the oscillating plate is R. The inner diameter R1 of the through hole 41 is greater than or equal to 1.1R and less than or equal to 1.5R, so that the through hole 41 can well reduce the internal flow loss and increase the humidification amount without significantly reducing the flow rate of the water mist.

In an embodiment, the atomization component 32 comprises an oscillation plate, and the distance H1 between the bottom of the flow guiding ring 40 and the upper side of the oscillation plate is greater than or equal to 20 mm and less than or equal to 40 mm. In this way, the flow guiding ring 40 will not be set too low to affect the flow of the water mist, and will not be set too high to be able to gather the water mist.

In another embodiment, the size H of the through hole 41 in the up-down direction is greater than or equal to 10 mm and less than or equal to 20 mm. In this way, the water mist can be well gathered and continue to rise within this height range.

It should be noted that the above three embodiments can be implemented individually or in combination.

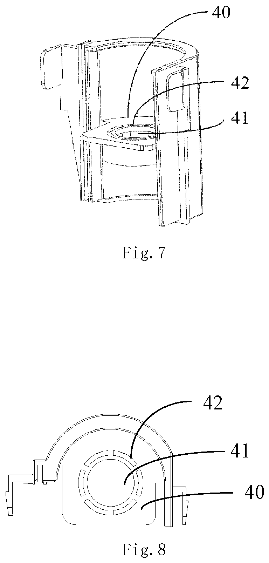

On the basis of the above embodiments, as shown in FIGS. 7 and 8, in order to further reduce the dripping sound of water droplets generated by the accumulation of water mist, a plurality of drainage ribs 42 is provided to protrude from the upper side of the flow guiding ring 40. The drainage ribs 42 are distributed at intervals along a circumferential direction of the through hole 41. The shape of the drainage ribs 42 is not limited as long as it can reduce the flow rate of the water droplets. In this way, the dripping sound generated by the water droplets is reduced and the use experience of the humidification device 100 is improved.

In an embodiment, as shown in FIG. 8, each of the drainage ribs 42 is in a strip shape, and a length direction of each of the drainage ribs 42 extends along the circumferential direction of the through hole 41. The number of the drainage ribs 42 is preferably greater than or equal to 4 and less than or equal to 3, so as to better reduce the flow rate of large-particle water droplets, reduce the dripping sound generated by the water droplets, and improve the use experience of the humidification device 100.

Based on the above embodiments, as shown in FIGS. 2 to 4, the box assembly 10 comprises a water tank 11 and a cover 12. The water tank 11 forms the cavity 20 with an opening at an upper side. The cover 12 is provided to cover the upper side of the water tank 11. A mist outlet 101 is formed on the cover 12 and is communicated with the air duct 330, so that the water mist flows to the room through the mist outlet 101. It can be understood that in other embodiments, the mist outlet 101 can also be formed in the humidification assembly 30. In this embodiment, the mist outlet 101 is provided on the cover 12, and the cover 12 covers an opening on the upper side of the water tank 11 to protect the water tank 11, so as to prevent the water stored in the water tank 11 from spilling, thereby reducing the possibility of impurities falling into the water tank 11. This makes the water quality in the water tank 11 better and suitable for atomization and humidification. When the water tank 11 needs to be cleaned, the cover 12 can be opened and the stored water can be poured out for easy cleaning. When water needs to be added, the cover 12 can also be opened to add water.

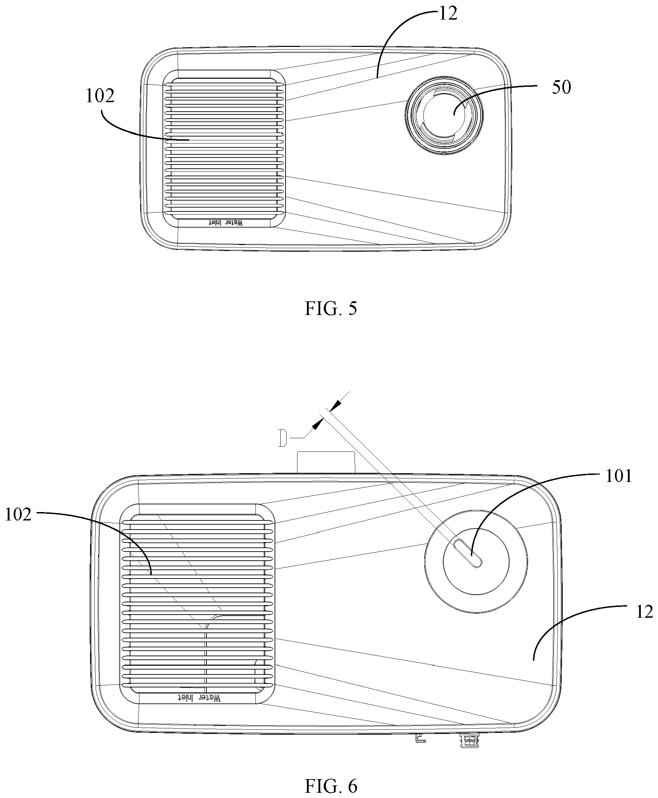

The shape and size of the mist outlet 101 are not limited. It can be understood that if the size of the mist outlet 101 is set too large, the mist outlet height may be insufficient. After the humidification device 100 is operated for a long time, the water mist will easily wet the surroundings of the mist outlet 101. If the size of the mist outlet 101 is too small, a water film will be formed at the mist outlet 101, resulting in the water mist being unable to be sent out. Therefore, in an embodiment, as shown in FIG. 6, the mist outlet 101 is elongated, and specifically may be elongated, such as a rectangle. The width D of the mist outlet 101 is greater than or equal to 4 mm and less than or equal to 7 mm. Within this size range, the water mist can flow out from the mist outlet 101 smoothly and has a high mist outlet height, and the water mist is not likely to wet the humidification device 100. It should be noted that the minimum inner diameter of the mist outlet 101 is the minimum size of the cross section of the mist outlet 101 in the mist outlet direction. In an embodiment, the mist outlet 101 is elongated, and the inner diameter of the mist outlet 101 in the short side direction is the minimum inner diameter of the mist outlet 101.

In an embodiment, as shown in FIGS. 4 to 6, in this embodiment, a mist isolation component 50 is provided between the atomization component 32 and the mist outlet 101. The mist channel at the mist isolation component 50 has a projected area of S in the up-down direction, and the projected area of the mist isolation component 50 in the up-down direction is greater than or equal to 0.5S. The projected area of the mist channel at the mist isolation component 50 in the up-down direction refers to the total cross-sectional area of the mist passing through the mist isolation component 50. The mist isolation component 50 plays a role in dispersing the water mist, thereby reducing the proportion of large-particle water droplets in the mist outlet 101 and preventing large-particle water mist from wetting the surrounding area where the humidification device 100 is placed when the humidification device 100 is working.

In an embodiment, as shown in FIGS. 1 to 3, the humidification assembly 30 is sandwiched between the cover 12 and the water tank 11, and is at least partially accommodated in the cavity 20. In this embodiment, when the water tank 11 needs to be cleaned, the cover 12 can be disassembled, the humidification assembly 30 can be taken out, and then the cover 12 and the water tank 11 can be easily cleaned.

In an embodiment, a water inlet 102 is also provided on the cover 12, so that when water is added to the water tank 11, there is no need to open the cover 12, making the operation more convenient.

Further, in an embodiment, as shown in FIG. 3, the cavity 20 comprises a first accommodating cavity 21 and a second accommodating cavity 22 spaced apart from each other in the transverse direction. A valve assembly 60 is provided between the first accommodating cavity 21 and the second accommodating cavity 22. The water inlet 102 is provided on the cover 12 and above the first accommodating cavity 21. The humidification assembly 30 is at least partially accommodated in the second accommodating cavity 22. The mist outlet 101 is located above the second accommodating cavity 22. It can be understood that in this embodiment, more water can be stored in the first accommodating cavity 21, while the water level in the second accommodating cavity 22 can be controlled by the valve body assembly 60 and maintained at a certain level, so as to facilitate the atomization component 32 to atomize the water in the water tank 11 to generate water mist.

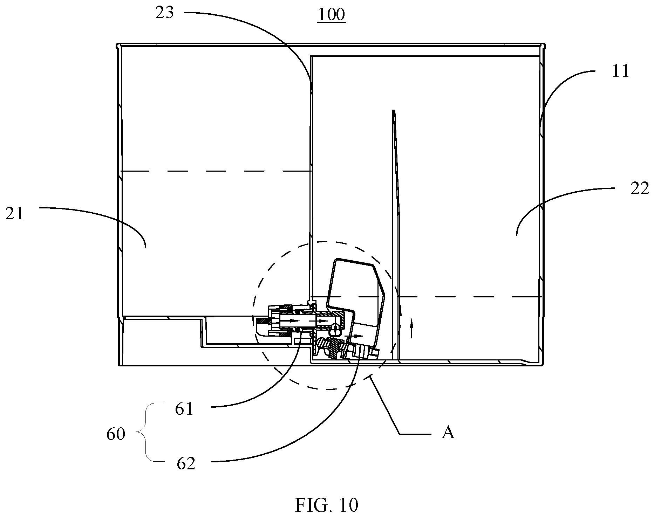

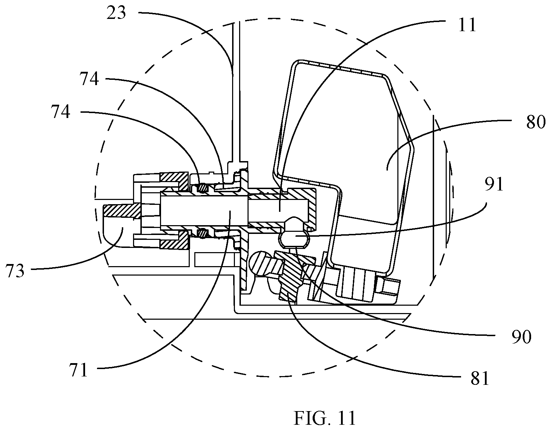

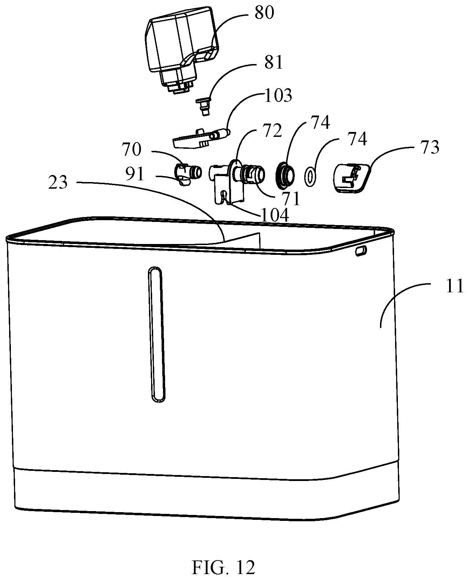

As shown in FIGS. 10 to 12, in an embodiment, a structure of a humidification device 100 according to an embodiment of the present application is as shown in the drawings. The humidification device 100 can be a humidifier, a garment steamer or other water level control system that is provided with the first accommodating cavity 102 and the second accommodating cavity 103 and replenishes water through the first accommodating cavity 102 to the second accommodating cavity 103. In the related art, specifically, in this embodiment, the humidification device 100 comprises a water tank 11 and a valve body assembly 10. The water tank 11 forms the first accommodating cavity 102 and the second accommodating cavity 103 distributed in the transverse direction. The valve body assembly 10 is provided between the first accommodating cavity 102 and the second accommodating cavity 103.

In an embodiment, the humidification device 100 is a humidifier, and an atomizer is provided in the second accommodating cavity 103. The first accommodating cavity 102 supplies water to the second chamber through the valve body assembly 10, so that the water level in the second accommodating cavity 103 is controlled within a certain range to facilitate the operation of the atomizer. In a traditional humidifier, the first accommodating cavity 102 and the second accommodating cavity 103 are distributed in the up-down direction, but in this embodiment, the first accommodating cavity 102 and the second accommodating cavity 103 are spaced apart in the transverse direction. In the related art, the first accommodating cavity 102 and the second accommodating cavity 103 are usually distributed in the up-down direction. However, in the present application, the positional relationship between the first accommodating cavity 102 and the second accommodating cavity 103 is spaced apart in the transverse direction. As shown in FIG. 10, the valve body assembly 10 in the figure is in an open state. The direction of the water flow when the first accommodating cavity 102 supplies water to the second accommodating cavity 103 is as shown in the figure. In this embodiment, in order to realize the replenishment of water from the first accommodating cavity 102 to the second accommodating cavity 103 and to achieve relatively precise control of the water level in the second accommodating cavity 103, the present application also provides a valve body assembly 10.

As shown in FIGS. 10 to 12, in the present application, the valve body assembly 10 is installed between the first accommodating cavity 102 and the second accommodating cavity 103, so that the first accommodating cavity 102 replenishes water to the second accommodating cavity 103 through the valve body assembly 10. In an embodiment, a partition 23 is provided between the first accommodating cavity 102 and the second accommodating cavity 103. The specific structure of the partition 23 is not limited as long as it is used to separate the first accommodating cavity 102 and the second accommodating cavity 103 and to communicate the first accommodating cavity 102 with the second accommodating cavity 103 through the through hole on the partition 23. The valve body assembly 10 is installed on the partition 23 and passes through the through hole. It can be understood that in other embodiments, the valve body assembly 10 can be installed in a variety of ways, as long as the first accommodating cavity 102 can replenish water to the second accommodating cavity 103 through the valve body assembly 10 and the water level of the second accommodating cavity 103 can be controlled through the valve body assembly 10.

As shown in FIGS. 10 to 12, in this embodiment, the valve body assembly 10 comprises a first valve body component 11 and a second valve body component 62. The first valve body component 11 is formed with a passage 63, and the passage 63 is used to communicate the first accommodating cavity 102 with the second accommodating cavity 103. The second valve body component 62 is rotatable relative to the first valve body component 11. The second valve body component 62 comprises a float 80 and a seal 81. The float 80 is used to rise and fall with the change of the water level in the second accommodating cavity 103. The seal 81 rotates between the first working position and the second working position as the float 80 rises and falls. The seal 81 blocks the passage 63 in the first working position, and opens the passage 63 in the second working position.

In the embodiment of the present application, the specific shape of the passage 63 is not limited, as long as it can communicate the first accommodating cavity 102 with the second accommodating cavity 103. In some cases, the water stored in the first accommodating cavity 102 flows to the second accommodating cavity 103 through the passage 63 to supply water to the second accommodating cavity 103 and drive the water level in the second accommodating cavity 103 to rise. The water-consuming components in the second accommodating cavity 103, such as the atomization device in the humidifier or the steam generator in the garment steamer, consume the water in the second accommodating cavity 103, so that the water level in the second accommodating cavity 103 decreases. The specific structural material of the float 80 is not limited. For example, it can be a hollow rubber ball, a silicone ball, or a lightweight material with high buoyancy such as foam. The buoyancy of the float 80 changes as the water level in the second accommodating cavity 103 changes, and the rise and fall of the water level in the second accommodating cavity 103 drives the float 80 to rise and fall.

In this embodiment, as shown in FIG. 10, the first valve body is rotatably installed. The rotational installation method of the first valve body is not limited. For example, it can be rotationally fixed to the water tank 11, or can be rotationally fixed to the second valve body. Since the seal 81 and the float 80 are both installed on the second valve body, the rise and fall of the float 80 drives the second valve body to rotate, and further drives the seal 81 to rotate and the position changes. Specifically, when the water level in the second accommodating cavity 103 rises to a certain height, such as the first liquid level, the float 80 rises, drives the seal 81 to rotate to the first working position, and blocks the passage 63. At this time, the water in the first accommodating cavity 102 no longer flows to the second accommodating cavity 103. If the water-consuming components in the second accommodating cavity 103 operate, the water level in the second accommodating cavity 103 will drop. When the water level in the second accommodating cavity 103 drops to a certain height, such as the second liquid level, the position of the float 80 is lowered, driving the seal 81 to rotate to the second working position, and opening the passage 63, the water in the first accommodating cavity 102 flows to the second accommodating cavity 103, causing the water level in the second accommodating cavity 103 to rise. It can be understood that the first liquid level is higher than the second liquid level. When the water level in the second accommodating cavity 103 rises to the first liquid level again, the passage 63 is blocked again. In this way, the water level in the second accommodating cavity 103 is controlled between the first liquid level and the second liquid level, thereby achieving control of the water level in the second accommodating cavity 103.

It should be noted that, in this embodiment, since the second valve body component 62 is rotatably installed, the seal 81 rotates as the float 80 rises and falls, and the existence of the rotation arm amplifies the impact of changes in the buoyancy of the float 80 on the movable stroke of the seal 81, so that even a relatively small change in the water level can drive the seal 81 to move between the first working position and the second working position. Specifically, compared with other technical solutions that directly open or block the passage 63 by rise and fall of the float 80, the structure of the valve body assembly 10 in this embodiment makes the liquid level difference between the first liquid level and the second liquid level smaller, that is, a more accurate control of the water level in the second accommodating cavity 103 is achieved, and the overall structure of the second valve body assembly 10 is simple, reliable, and easy to maintain.

In an embodiment, as shown in FIG. 10, the second valve body component 62 has a rotating end and a free end that rotates up and down around the rotating end. The float 80 is provided at the free end, and the seal 81 is located between the rotating end and the free end. In this embodiment, the seal 81 rotates upward as the float 80 rises, and rotates downward as the float 80 descends. The seal 81 blocks the passage 63 upward in the first working position. The buoyancy enhances the sealing performance of the seal 81 on the passage 63. In other embodiments, the rotating end can also be located between the seal 81 and the float 80, so that the seal 81 rotates downward as the float 80 rises, and the seal 81 rotates upward as the float 80 descends. The seal 81 blocks the passage 63 downward in the first working position. In this way, when the liquid level of the second accommodating cavity 103 rises, the seal 81 can more easily open the passage 63.

Based on the above embodiments, as shown in FIGS. 10 to 12, the first valve body component 11 comprises an elastic water-sealing component 70. In this embodiment, the elastic water-sealing component 70 refers to a structure whose material has elastic deformation characteristics and a certain sealing property and which can cooperate with the seal 81 to block the water flow between the first accommodating cavity 102 and the second accommodating cavity 103. In this embodiment, the passage 63 is formed in the elastic water-sealing component 70, the seal 81 presses against the water outlet end 90 of the passage 63 in the first working position, and deforms the elastic water-sealing component 70 under pressure. That is to say, in this embodiment, when the passage 63 is blocked, the elastic water-sealing component 70 is deformed under pressure and has a certain reaction force on the seal 81. On the one hand, the fit between the seal 81 and the elastic water-sealing component 70 is closer and the sealing performance is better. On the other hand, when the water level drops and the buoyancy decreases, the reaction force restored by the elastic seal 81 acts on the seal 81, making it easier for the seal 81 to pop open, so that water flow can enter the passage 63 more smoothly, and the valve body assembly 10 can control the water level in the second accommodating cavity 103 more accurately.

The elastic water-sealing component 70 and/or the seal 81 can be made of various materials, such as rubber or silicone. In an embodiment, the elastic water-sealing component 70 and the seal 81 are made of silicone, which has good durability, safe ingredients, is easy to clean, and is not likely to breed bacteria.

Based on the previous embodiment, as shown in FIG. 10, in an embodiment, the passage 63 has a water outlet section 91 adjacent to the water outlet end 90 and extending in the up-down direction. The seal 81 is located below the water outlet section 91 and presses upward against the water outlet section 91 in the first working position. The inner diameter of the water outlet section 91 is at least partially configured to gradually expand and then contract from top to bottom. In this embodiment, it can be seen that the overall shape of the elastic water-sealing component 70 in the water outlet section 91 is drum-shaped. In this way, the elastic water-sealing component 70 is more likely to be compressed and deformed upward when the seal 81 presses against the water outlet end 90 of the passage 63, thereby accumulating greater elastic force and providing better sealing to the passage 63.

It can be understood that when the valve body assembly 10 is used in household appliances such as humidifiers or evaporators, it is best to have an easily disassembled structure so that users can disassemble and clean the valve body assembly 10 to prevent the valve body assembly 10 from breeding bacteria and affecting the user's health after long-term use, or being blocked by scale and affecting its water level control performance. To this end, in an embodiment, the first valve body component 11 is detachably mounted on the partition 23 between the first accommodating cavity 102 and the second accommodating cavity 103. In this way, when the user wants to thoroughly clean the first valve body component 11, the first valve body component 11 can be detached from the water tank 11, so that the elastic water-sealing component 70 can be easily cleaned.

In an embodiment, the entire valve body assembly can be detached from the partition 23. On the one hand, this facilitates the installation of the valve body assembly 10, on the other hand, the entire valve body assembly 10 can be detached from the water tank 11 and cleaned thoroughly to avoid the breeding of bacteria that affects the user's health, or being clogged with scale that affects its water level control performance. To this end, in an embodiment, the first valve body component 11 has a mounting part, the second valve body component 62 has a mounting fitting part, and the second valve body component 62 is rotatably mounted on the first valve body component 11 through the cooperation of the mounting part and the mounting fitting part. In this way, the second valve body component 62 is rotatably installed on the first valve body component 11 instead of the water tank 11, and the entire valve body assembly 10 can be disassembled from the water tank 11 for maintenance.

Based on the previous embodiment, one of the mounting part and the mounting fitting part is a rotating shaft 103, and the other is an open slot 104 for the rotating shaft 103 to engage. In an embodiment, the opening slot 104 is provided on the first valve body component 11, and the rotating shaft 103 is provided on the rotating end of the second valve body component 62, so that the second valve body component 62 is rotatably mounted on the first valve body component 11, and due to the design of the open slot 104, the first valve body component 11 and the second valve body component 62 can be easily disassembled. When maintenance and cleaning of the valve body assembly 10 are required, the first valve body component 11 can be disassembled from the water tank 11, and then the first valve body component 11 and the second valve body component 62 are separated. After the first valve body component 11 and the second valve body component 62 are thoroughly cleaned, the first valve body component 11 and the second valve body component 62 can be assembled first, and then the first valve body component 11 is installed on the water tank 11. In this way, it is convenient for installation and operation, and it is easier to clean the valve body assembly 10 to avoid bacterial growth.

In an embodiment, as shown in FIG. 10, the first valve body component 11 comprises a tubular portion 71, the tubular portion 71 is inserted into the through hole of the partition 23 to have a first end located in the first accommodating cavity 102 and a second end located in the second accommodating cavity 103, and the elastic water-sealing component 70 is provided at the second end. In this way, the first valve body component 11 is detachably installed on the water tank 11, the tubular portion 71 has a hollow tube core, and the elastic water-sealing component 70 is installed on the second end of the tubular portion 71 and the passage 63 therein is communicated with the tube core to achieve communication between the first accommodating cavity 102 and the second accommodating cavity 103. In this way, the first valve body component 11 and the partition 23 can be detachably installed through a simple structure. In an embodiment, the tubular portion 71 extends transversely.

The elastic water-sealing component 70 and the tubular portion 71 can be connected in various ways, such as snap connection, screw connection, etc. In this embodiment, the elastic water-sealing component 70 is detachably inserted into in the tubular portion 71. Specifically, the elastic water-sealing component 70 can be sleeved in the core of the tubular portion 71, or can be sleeved on the outer periphery of the tubular portion 71. In this way, the elastic water-sealing component 70 is fixedly connected to the tubular portion 71 through the elastic force of the elastic water-sealing component 70. The structure is simple and easy to disassemble and assemble. In this way, when cleaning the first valve body component 11, the elastic water-sealing component 70 and the tubular portion 71 can also be disassembled and cleaned separately, so that the cleaning is more thorough. Furthermore, in an embodiment, the elastic water-sealing component 70 has a sleeve section extending in the transverse direction and a water outlet section 91 extending in the up-down direction. The sleeve section and the water outlet section 91 are integrally formed, so that the elastic water-sealing component 70 has good sealing performance and is more durable and reliable.

In order to better fix the first valve body component 11 and the water tank 11, in an embodiment, as shown in FIGS. 1 to 3, a baffle 72 is provided to protrude from the periphery of the tubular portion 71, and the first valve body component 11 further comprises a fixing portion, the fixing portion is detachably connected to the first end, so that the partition 23 is clamped between the fixing portion and the baffle 72. In this embodiment, when installing the first valve body component 11, the second end of the tubular portion 71 can be held and the tubular portion 71 can be inserted into and pass through the first accommodating cavity 102 from the side of the through hole facing the second accommodating cavity 103, which makes the baffle 72 abut against the partition 23, and then the fixing portion is fixed to the first end of the tubular portion 71 from the first accommodating cavity 102, so that the partition 23 is stuck between the fixing portion and the baffle 72. On the one hand, the baffle 72 plays a limiting role, fixing the position of the first valve body component 11, and on the other hand, the baffle 72 increases the contact area between the tubular portion 71 and the periphery of the through hole, so that the through hole is better sealed to prevent water from flowing through the gap between the tubular portion 71 and the through hole, affecting the control performance of the valve body assembly 10 on the water level of the second accommodating cavity 103.

The specific structure of the fixing portion is not limited, as long as it can be fixed on the first end of the tubular portion 71. In an embodiment, as shown in FIGS. 10 to 12, the fixing portion is a knob 73, and the knob 73 is screwed to the first end. In this way, the user only needs to rotate the knob 73 to reliably fix and install the first valve body component 11 on the partition 23. The structure is simple, reliable, and easy to operate.

In order to further enhance the sealing performance of the tubular portion 71 to the through hole, a sealing ring 74 is provided around the tubular portion 71, and the sealing ring 74 is used to cushion between the tubular portion 71 and the partition 23. The sealing ring 74 can be made of rubber, silicone, etc. In an embodiment, two sealing rings 74 are provided. In this embodiment, the partition 23 is formed with a sleeve extending transversely on the periphery of the through hole, the tubular portion 71 is sleeved in the sleeve, so that the contact area between the tubular portion 71 and the partition 23 increases. Furthermore, a first sealing ring 74 is provided between the inner circumference of the sleeve and the outer circumference of the tubular portion 71, and a second sealing ring 74 is provided between the baffle 72 and the partition 23. The seal 81 is bent and has a portion sandwiched between the baffle 72 and the partition 23 and a portion sandwiched between the inner circumference of the sleeve and the tubular portion 71. In this way, the first sealing ring 74 and the second sealing ring 74 jointly block the through hole, so that the sealing performance of the first valve body component 11 to the through hole is enhanced. This prevents water from flowing through the gap between the tubular portion 71 and the through hole, thereby affecting the control performance of the valve body assembly 10 on the water level of the second accommodating cavity 103.

The above are only some embodiments of the present application, and are not intended to limit the scope of the present application. Under the concept of the present application, any equivalent structure transformation made using the contents of the description and drawings of the present application, or directly or indirectly applied in other related technical fields, are comprised in the scope of the present application.

## Claims

1. A humidification device, **characterized by** comprising:
a box assembly provided with a cavity for storing water; and
a humidification assembly comprising a fan component and an atomization component, wherein the humidification assembly is detachably installed on the box assembly as a whole, and the atomization component is configured to atomize water in the cavity to form water mist.

2. The humidification device according to claim 1, wherein the fan component is configured to deliver airflow toward the atomization component in a first direction, and drive the water mist to flow toward a room in a second direction after the airflow reaches the atomization component; and the first direction is a radial direction of the fan component.

3. The humidification device according to claim 1 or 2, wherein the humidification component further comprises an air duct wall connecting the fan component and the atomization component, and the air duct wall forms an air duct for communicating with the room to allow the water mist to flow toward the room along the air duct.

4. The humidification device according to claim 3, wherein the air duct wall is configured to extend in an up-down direction, the fan component is located at an upper end of the air duct wall, and the atomization component is located at a lower end of the air duct wall.

5. The humidification device according to claim 4, wherein the air duct comprises a first air supply section and a second air supply section provided sequentially in an air supply direction, and an air inlet of the first air supply section and an air outlet of the second air supply section are both located at the upper end of the air duct wall; the fan component is located at the air inlet of the first air supply section; and an adjoiner between the first air supply section and the second air supply section is located at the lower end of the air duct wall and is provided with the atomization component.

6. The humidification device according to claim 5, further comprising a flow guiding ring, wherein the flow guiding ring is provided in the second air supply section and is located above the atomization component, and the flow guiding ring has a through hole extending in the up-down direction.

7. The humidification device according to claim 6, wherein the atomization component comprises an oscillating plate, an inner diameter of the oscillating plate is R, and an inner diameter of the through hole is greater than or equal to 1.1R and less than or equal to 1.5R; and/or
a distance between a bottom of the flow guiding ring and an upper side of the oscillating plate is greater than or equal to 20mm and less than or equal to 40mm; and/or
a size of the through hole in the up-down direction is greater than or equal to 10mm and less than or equal to 20mm.

8. The humidification device according to claim 6, wherein a plurality of drainage ribs are provided to protrude from an upper side of the flow guiding ring, wherein the plurality of drainage ribs are distributed at an interval in a circumferential direction of the through hole.

9. The humidification device according to claim 8, wherein a number of the drainage ribs is greater than or equal to 4 and less than or equal to 9.

10. The humidification device according to any one of claims 4 to 9, wherein the box assembly comprises a water tank and a cover, the water tank is configured to form the cavity with an opening at an upper side, and the cover is configured to cover the upper side of the water tank; and a mist outlet is formed on the cover and is communicated with the air duct, so that the water mist flows to the room through the mist outlet.

11. The humidification device according to claim 10, wherein the mist outlet is elongated, and a width of the mist outlet is greater than or equal to 4mm and less than or equal to 7mm.

12. The humidification device according to claim 10, wherein a mist isolation component is provided between the atomization component and the mist outlet, a projected area of a mist channel at the mist isolation component in the up-down direction is S, and a projected area of the mist isolation component in the up-down direction is greater than or equal to 0.5S.

13. The humidification device of claim 10, wherein the humidification assembly is sandwiched between the cover and the water tank and is at least partially accommodated in the cavity.

14. The humidification device according to claim 13, wherein the cavity comprises a first accommodating cavity and a second accommodating cavity spaced apart in a transverse direction, and a valve body assembly is provided between the first accommodating cavity and the second accommodating cavity; a water inlet is provided on the cover and is located above the first accommodating cavity, the humidification assembly is at least partially accommodated in the second accommodating cavity, and the mist outlet is located above the second accommodating cavity.

15. A valve body assembly, applied to a humidification device according to any one of claims 1 to 14, **characterized in that** the valve body assembly is provided between a first accommodating cavity and a second accommodating cavity of the humidification device, the valve body assembly comprises:
a first valve body component, wherein the first valve body component is configured to form a passage for communicating the first accommodating cavity with the second accommodating cavity; and
a second valve body component comprising a float and a seal, wherein the second valve body component is rotatably arranged relative to the first valve body component, the float is configured to rise and fall with a change in a water level of the second accommodating cavity, the seal is configured to rotate between a first working position and a second working position as the float rises and falls; and the seal is configured to block the passage in the first working position and open the passage in the second working position.

16. The valve body assembly according to claim 15, wherein the second valve body component has a rotating end and a free end that rotates up and down around the rotating end, the float is provided on the free end, and the seal is located between the rotating end and the free end.

17. The valve body assembly according to claim 16, wherein the first valve body component comprises an elastic water-sealing component, the passage is formed in the elastic water-sealing component, and the seal is configured to press against a water outlet end of the passage in the first working position to enable the elastic water-sealing component to deform under pressure.

18. The valve body assembly according to claim 17, wherein the passage has a water outlet section adjacent to the water outlet end and extending in an up-down direction; the seal is located below the water outlet section and presses against the water outlet section upward in the first working position; and an inner diameter of the water outlet section at least partially gradually expands and then contracts from top to bottom.

19. The valve body assembly according to claim 17 or 18, wherein the first valve body component is detachably mounted on a partition between the first accommodating cavity and the second accommodating cavity.

20. The valve body assembly according to claim 19, wherein the first valve body component has a mounting portion, the second valve body component has a mounting fitting portion, and the second valve body component is rotatably mounted on the first valve body component through cooperation between the mounting portion and the mounting fitting portion.

21. The valve body assembly according to claim 20, wherein one of the mounting portion and the mounting fitting portion is a rotating shaft, and the other is an open slot for the rotating shaft to engage.

22. The valve body assembly according to claim 19, wherein the first valve body component comprises a tubular portion, and the tubular portion is inserted into a through hole of the partition to have a first end located in the first accommodating cavity and a second end located in the second accommodating cavity; the elastic water-sealing component is provided at the second end and is detachably inserted into the tubular portion.

23. The valve body assembly according to claim 22, wherein a baffle is provided to protrude from a periphery of the tubular portion; the first valve body component further comprises a fixing portion, the fixing portion is detachably connected to the first end, so that the partition is clamped between the fixing portion and the baffle.

24. The valve body assembly according to claim 23, wherein the fixing portion is a knob, and the knob is screwed to the first end.

25. The valve body assembly according to claim 22, wherein a sealing ring is provided around an outside of the tubular portion, and the sealing ring is provided between the tubular portion and the partition.
